# EUROPEAN PATENT SPECIFICATION

(11) **EP 3 598 761 B1**
(45) Date of publication and mention of the grant of the patent: **19.01.2022**
(21) Application number: 18893323.8
(22) Date of filing: 14.06.2018
(51) Int. Cl.: H04N 21/231, H04N 21/233, H04N 21/234, H04N 21/2343, H04N 21/854

(54) **METHOD AND DEVICE FOR SYNTHESIZING AUDIO AND VIDEO DATA STREAM**
VERFAHREN UND VORRICHTUNG ZUR SYNTHETISIERUNG EINES AUDIO- UND VIDEODATENSTROMS
PROCÉDÉ ET DISPOSITIF PERMETTANT DE SYNTHÉTISER UN FLUX DE DONNÉES AUDIO ET VIDÉO

(30) Priority: 25.05.2018 CN 201810517553
(43) Date of publication of application: 22.01.2020
(73) Proprietor: Wangsu Science & Technology Co., Ltd., Shanghai 200030 (CN)
(72) Inventor: HUANG, Xuehui, 200030 Shanghai (CN); LV, Shibiao, 200030 Shanghai (CN)
(74) Representative: de Arpe Fernandez, Manuel
(86) International application number: PCT/CN2018/091206
(87) International publication number: WO 2019/223040

(56) References cited:
- WO-A1-2008/084179
- CN-A- 1 407 831
- CN-A- 101 472 090
- CN-A- 107 613 409
- US-A1- 2002 035 724
- US-A1- 2002 097 258
- US-A1- 2007 143 800
- US-A1- 2012 027 093
- US-A1- 2016 366 452
- US-B1- 6 181 383
- US-B1- 6 330 286

## Description

### FIELD OF DISCLOSURE

The present disclosure generally relates to the field of multimedia technology and, more particularly, relates to a method and device for combining audio and video data streams.

### BACKGROUND

With the development of Internet technology and the continuous acceleration of broadband, the Internet is increasingly connected with people's lives. Watching live streams has become one of the mainstreams of entertainment. At present, live broadcast modes that combine multiple channels of data streams, such as multi-person video sessions, mic-connected live broadcasts, etc. have continuously emerged and are widely accepted.

In the live broadcast modes that include simultaneously input multiple channels of on-demand streams or live streams, each channel of data stream may have different resolution, code rate, audio sampling rate, and audio/video encoding format, etc. This leads to an issue of combining multiple channels of data streams that is not encountered in the traditional live broadcast systems with a single channel of data stream input. At the same time, affected by the factors such as the stream-pushing state of an anchor terminal and the quality of the network transmission, instability of the stream-pulling process of a data stream may occur in each channel of data stream, which makes the issue of combining multiple channels of input data streams even more complicated. Therefore, currently, there is a need for a method that is suitable for inputting multiple channels of data streams, and that may deal with the influence of data stream network fluctuations and conveniently and efficiently achieve the data stream combining process.

The document US 2016/0366452 A1 discloses methods for generating a transport stream such that the transport stream has at least one perfect splicing property, and/or such that the transport stream is indicative of at least one audio/video program and includes metadata indicative of whether the program has a perfect splicing property.

The document US 2007/143800 A1 discloses an in-home audio-visual transmission system comprising a gateway having input channels, each channel having a transcoder and a buffer. The system aims to provide in respect of each channel a predetermined buffering delay.

The document US 2002/097258 A1 discloses a multimedia project editing method configured to enable a user to combine multiple different video clips into a video project.

### BRIEF SUMMARY OF THE DISCLOSURE

To solve the problems in the existing technologies, the embodiments of the present disclosure provide a method in claim 1 and a device in claim 9 for combining audio/video data streams.

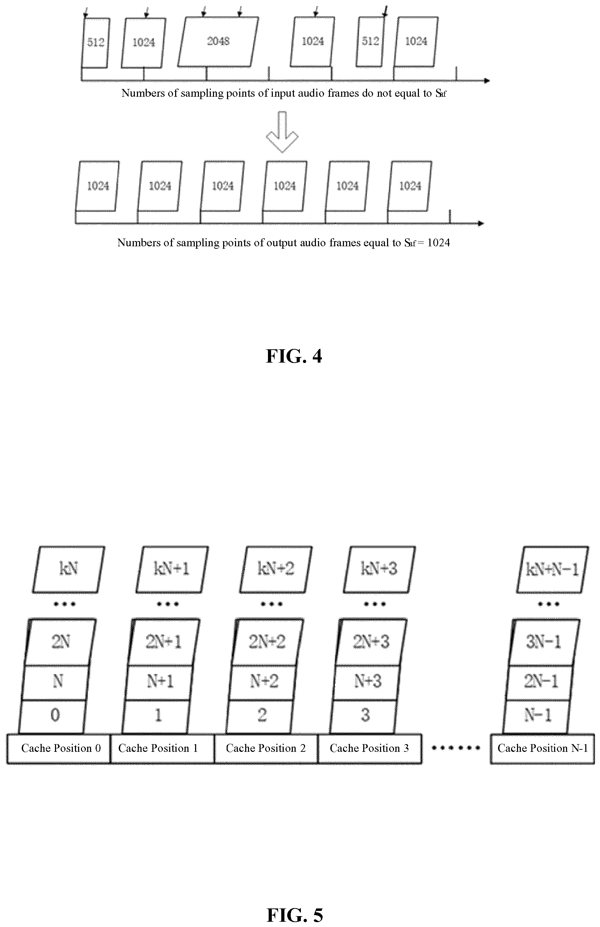

The invention is defined by the appended claims. An enabling embodiment is provided in figure 5. All the other embodiments described are provided only as examples and fall outside the scope of the claimed invention.

### BRIEF DESCRIPTION OF THE DRAWINGS

To make the technical solutions in the embodiments of the present disclosure clearer, a brief introduction of the accompanying drawings consistent with descriptions of the embodiments will be provided hereinafter. It is to be understood that the following described drawings are merely some embodiments of the present disclosure. Based on the accompanying drawings and without creative efforts, persons of ordinary skill in the art may derive other drawings.
FIG. 1 is a flowchart of a method for combining audio/video data streams according to some embodiments of the present disclosure;
FIG. 2 is a schematic diagram of a set of resampled video frames according to some embodiments of the present disclosure;
FIG. 3 is a schematic diagram of another set of resampled video frames according to some embodiments of the present disclosure;
FIG. 4 is a schematic diagram of resampled audio frames according to some embodiments of the present disclosure;
FIG. 5 is a schematic diagram of storage in a second storage space according to some embodiments of the present disclosure;
FIG. 6 is a schematic structural diagram of a device for combining audio/video data streams according to some embodiments of the present disclosure; and
FIG. 7 is a schematic structural diagram of a video composition server according to some embodiments of the present disclosure.

### DETAILED DESCRIPTION

To make the objective, technical solutions, and advantages of the present disclosure clearer, embodiments of the present disclosure will be made in detail hereinafter with reference to the accompanying drawings.

The embodiments of the present disclosure provide a method for combining audio/video data streams. The execution entity of the method may be a video composition server. The video composition server may be a backend server of a live broadcast platform that is mainly used for combining multiple channels of audio/video data streams and outputting the combined stream. The video composition server may simultaneously receive inputs of multiple channels of audio/video data streams, perform initial buffering, decoding, resampling, and re-buffering processes for each channel of audio/video data stream, and then combine the multiple channels of processed audio/video data streams. The video composition server may support multiple video-processing processes to run simultaneously, where each video-processing process is responsible for the following processing of one channel of audio/video data stream. The video composition server may include a processor, a memory, and a transceiver. The processor may be configured to perform the combining process of the audio/video data streams shown in the following process. The memory may be used to store data required and generated during the process, such as storing the audio/video frames of the audio/video data streams and the configured files in the combining process, etc. The transceiver may be configured to receive and transmit the relevant data during the process, such as receiving the raw audio/video data and outputting the combined audio/video data.

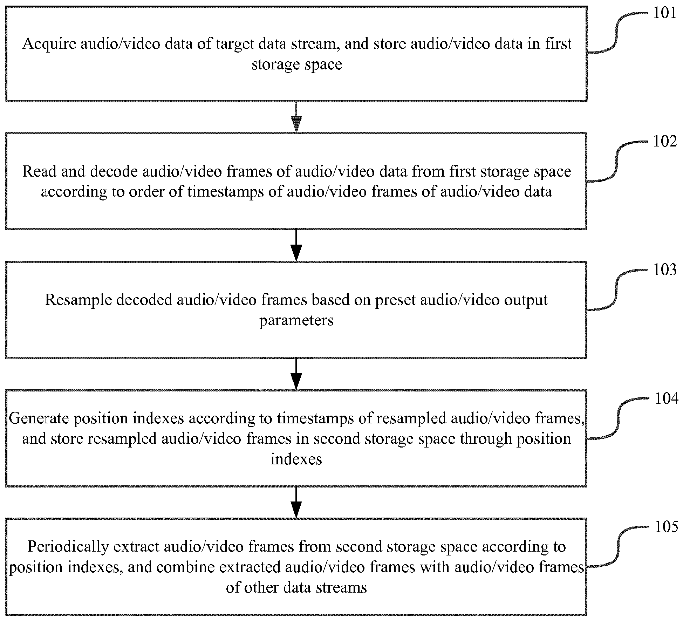

The processing flow shown in FIG.1 will be made in detail hereinafter with reference to specific implementations. The content may be as follows.

Step 101: acquire audio/video data of a target data stream, and store the audio/video data in a first storage space.

In one implementation, the video composition server may pull an audio/video data stream through the network or read an audio/video data stream from the local storage device, and then combine the acquired audio/video data stream with other audio/video data streams according to requirements. Specifically, taking the target data stream as an example, when a target data stream is added to the video composition server, or when the stream-pulling address of the target data stream changes, the video composition server may acquire the audio/video data of the target data stream based on the stream-pulling address of the target data stream, and create a video-processing process for the target data stream. Afterwards, the video composition server may first store the audio/video data of the target data stream in a first storage space through the video-processing process. Here, the first storage space may be viewed as a preset first-level cache space for storing newly pulled, unprocessed raw data. In addition, if the target data stream needs to be played with a delay, the frame data in the delayed time may be stored in the first storage space.

Optionally, to facilitate the subsequent data processing, the audio/video data of the target data stream may be divided. Correspondingly, partial process of Step 101 may be as follows: storing the audio data and the video data included in the audio/video data in an audio storage space and a video storage space of the first storage space, respectively.

The technical staff specifically divides the first storage space into an audio storage space for storing audio data and a video storage space for storing video data. Here, the structures and attributes of the audio storage space and the video storage space are identical, with only the types of stored data being different. In this way, after acquiring the audio/video data of the target data stream, the video composition server may divide the audio/video data into audio data and video data according to the data type, and then store the divided audio data and video data in the audio storage space and the video storage space of the first storage space, respectively. This will facilitate a free selection of audio data or video data for the subsequent data processing.

Optionally, the first storage space may support two storage modes: a congestion mode and an overlay mode. For on-demand streams and live streams, different storage modes may be selected. The corresponding process may be as follows: if the target data stream is a live stream, in the process of storing the audio/video data in the first storage space, when the first storage space is full, deleting the audio/video data stored earliest in the first storage space, then continuing to store the audio/video data; if the target data stream is an on-demand stream, in the process of storing the audio/video data in the first storage space, when the first storage space is full, continuing to store the audio/video data after waiting for the audio/video data stored in the first storage space to finish streaming.

In one implementation, in the process of storing the audio/video data of the target data stream in the first storage space, the video composition server may detect whether the first storage space is full. If the first storage space is full, different processes may be employed depending on the data stream type of the target data stream. Specifically, if the target data stream is a live stream, an overlay mode may be selected, that is, delete the audio/video data stored earliest in the first storage space, then continue to store the audio/video data. This avoids a high delay in outputting the audio/video data. If the target data stream is an on-demand stream, i.e., a user does not have a strict requirement on the timeliness of the data, a congestion mode may be selected, that is, continue to store the audio/video data after waiting for the audio/video data stored in the first storage space to finish streaming. This ensures the being-viewed audio/video data to be continuous without interruption. In addition, when the storing operation of the data stream is congested, the data stream acquisition operation may be also synchronously congested, thereby avoiding extra audio/video data to be acquired continuously.

Optionally, the size of the first storage space may be set according to a tolerable network delay and a playback delay. The corresponding process may be as follows: determining a size of the first storage space according to a preset maximum playback delay and a maximum network delay; and, in the process of acquiring the audio/video data of the target data stream, adjusting the size of the first storage space according to the detected playback delay requirement and/or real-time network delay.

In one implementation, the video composition server may set a maximum playback delay (i.e., a time interval between the data being generation and the data being played) and a maximum network delay (i.e., a time interval between the arrival of a preceding frame of data and the arrival of the following frame of data) for each channel of audio/video data stream, and then set the size of the first storage space based on the maximum playback delay and the maximum network delay. It is to be understood that after storing a frame of data in the first storage space, the video composition server needs to process all the frames of data already stored before that frame of data may be processed. Accordingly, if the first storage space is too large, the playback delay will be really high. However, if the first storage space is too small, when the network delay is high, all the frames of data stored in the first storage space may have already finished processing even before the following frame of data arrives. This may greatly reduce the consistency in outputting the audio/video data stream. Further, in the process of acquiring the audio/video data of the target data stream, the video composition server may also detect in real time the playback delay requirement and the real-time network delay, and then adjust the size of the first storage space according to the playback delay requirement and the real-time network delay.

Step 102: read and decode audio/video frames of the audio/video data from the first storage space in an order of timestamps of the audio/video frames of the audio/video data.

In one implementation, due to the influence of network fluctuations and the like, the rate of data stream acquisition and addition to the first storage space may fluctuate. At the same time, the arrival time of the frames of data between the audio data and the video data that have the same timestamp may also be inconsistent. Accordingly, after the video composition server stores the audio/video data of the target data stream in the first storage space, the timestamps of the audio/video frames of the audio/video data may be determined first. The audio/video frames of the audio/video data are then read from the first storage space according to an order of increased timestamp and are decoded.

Optionally, the speed of decoding an audio/video data stream may be controlled according to the real-time standard. The corresponding process may be as follows: periodically detecting the timestamp-based time-length of the audio/video frames of the audio/video data read and decoded from the first storage space; if the timestamp-based time-length is greater than the product of the preset playing rate and the physical time used for reading and decoding the audio/video data, suspending reading the audio/video frames of the audio/video data from the first storage space in the current cycle.

In one implementation, the video composition server may decode the audio/video data according to a certain rate requirement, that is, a timestamp-based time-length corresponding to audio/video data being decoded in a certain physical time should be fixed. When the timestamp-based time-length is greater than N times of a physical time, it means that the decoding speed is too fast. The decoding speed should be reduced at this moment, and the video composition server may sleep to some extent. Here, N is the set playing rate for the audio/video data stream. Accordingly, the video composition server may periodically detect the timestamp-based time-length of the target data stream read and decoded from the first storage space, and then determine whether the timestamp-based time-length is greater than the product of the preset playing rate and the physical time-length used to read and decode the audio/video data. If the timestamp-based time-length is greater than the product of the preset playing rate and the physical time-length used to read and decode the audio/video data, reading the audio/video frames from the first storage space may be suspended in the current cycle. For example, the physical time to start the decoding process is T1, and the timestamp of the first audio/video frame is TS1. When a preset cycle of the decoding process starts, the current physical time is obtained as T2, and the timestamp of the already decoded audio/video frames is TS2. When T2-T1 < TS2-TS1, the video composition server may suspend reading the audio/video frames in the current cycle.

Optionally, the foregoing process of determining the timestamp-based time-length may be specifically as follows: recording a timestamp of the initial audio frame and a timestamp of the initial video frame of the audio/video data read and decoded from the first storage space; periodically detecting, from the first storage space, the timestamp of the latest audio frame and the timestamp of the latest video frame of the read and decoded audio/video data ; and determining a difference between the smaller value of the timestamp of the latest audio frame and the timestamp of the latest video frame and the smaller value of the timestamp of the initial audio frame and timestamp of the initial video frame as the timestamp-based time-length of the audio/video frames of the audio/video data.

In one implementation, the video composition server may record the timestamp of the initial audio frame and the timestamp of the initial video frame of the audio/video data when beginning to read and decode the audio/video data of the target data stream. In the decoding process, the video composition server may periodically detect the timestamp of the latest audio frame and the timestamp of the latest video frame of the audio/video data read and decoded from the first storage space. Accordingly, the smaller value of the timestamp of the latest audio frame and the timestamp of the latest video frame and the smaller value of the timestamp of the initial audio frame and the timestamp of the initial video frame may be respectively determined, and the difference between the two smaller values is determined as the timestamp-based time-length of the audio/video frames of the audio/video data.

Based on the aforementioned process of separately storing the audio data and the video data in the first storage space, data may be freely selected to be read and decoded from the audio storage space or the video storage space according to certain rules. Correspondingly, the process of Step 102 is as follows: detecting the timestamp of the latest audio frame and the timestamp of the latest video frame of the decoded audio/video data; if the timestamp of the latest audio frame is greater than or equal to the timestamp of the latest video frame, reading and decoding video frames of the audio/video data from the video storage space according to an order of the timestamps of the video frames; and if the timestamp of the latest audio frame is smaller than the timestamp of the latest video frame, reading and decoding audio frames of the audio/video data from the audio storage space according to an order of the timestamps of the audio frames.

In one implementation, in the process of reading and decoding the audio/video frames from the first storage space, the video composition server may detect the timestamp of the latest audio frame and the timestamp of the latest video frame of the decoded audio/video data, and then compare the values of the timestamp of the latest audio frame and the timestamp of the latest video frame. If the timestamp of the latest audio frame is greater than or equal to the timestamp of the latest video frame, video frames of the audio/video data are read and decoded from the video storage space according to an order of the timestamps of the video frames. If the timestamp of the latest audio frame is less than the timestamp of the latest video frame, audio frames of the audio/video data are read and decoded from the audio storage space according to an order of the timestamps of the audio frames. This may allow the timestamp gap between the adjacent decoded audio frame and decoded video frame to be as small as possible, so as to ensure the consistency of the logically corresponding time between the audio frames and the video frames.

Step 103: resample the decoded audio/video frames based on preset audio/video output parameters.

Since different data streams have different video frame rates, audio sampling rates, and numbers of audio tracks, after decoding the audio/video frames of the target data stream, the video composition server resamples the decoded audio/video frames according to the preset audio/video output parameters including a video frame rate, audio sampling rate, and the like. This may allow the audio/video frames from different data streams to have the same frame rate, audio sampling rate, and number of audio tracks, etc., after the resampling process, thereby facilitating further control of the combining process.

The process for resampling the video frames is as follows:
determining a position index corresponding to a decoded video frame based on the preset standard video frame rate and the timestamp of the decoded video frame; and updating the timestamp of the decoded video frame according to the position index.

In one implementation, after decoding a video frame of the target data stream, the video composition server may first determine a position index corresponding to the decoded video frame based on the preset standard video frame rate and the timestamp of the decoded video frame, and then update the timestamp of the decoded video frame according to the position index. Specifically, according to the preset standard video frame rate Fᵣ, the time-length that a video frame lasts is first calculated as T_{vf}= 1/Fᵣ. Afterwards, the timestamp of each decoded video frame is divided by T_{vf} and the result is rounded down to obtain a position index corresponding to each decoded video frame. The eventually updated timestamp of a decoded video frame is the product of the corresponding position index multiplied by T_{vf}.

Optionally, if there are multiple decoded video frames that correspond to the same position index, then the last video frame of the multiple decoded video frames is retained while the other decoded video frames in the multiple video frames are deleted. If the position indexes corresponding to the decoded video frames are discontinuous, all the vacant position indexes are determined, and a video frame corresponding to an adjacent position index of each vacant position index is copied as the video frame corresponding to the vacant position index.

In one implementation, after determining the position indexes corresponding to the decoded video frames, the video composition server may further process the position indexes. If there are multiple decoded video frames that correspond to the same position index, the last video frame among the decoded multiple video frames having the same position index is retained while the other decoded video frames are deleted. If the position indexes of the decoded video frames are discontinuous because the timestamp gaps of adjacent video frames are relatively large, all the vacant position indexes may be determined first, and then a video frame of the adjacent position index of a vacant position index is copied as the corresponding video frame for the vacant position index, to allow the position indexes to be continuous.

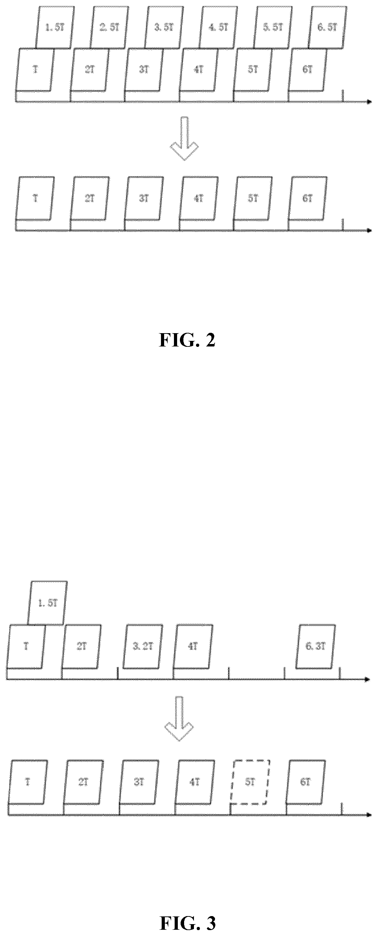

The above process may refer to FIG. 2 and FIG. 3. The lower arrows in the figures represent the time direction, the parallelograms represent the video frames, and the values inside the parallelograms represent the timestamps of the video frames. If the standard video frame rate is Fᵣ = 1/T, then the time-length T_{vf} that a video frame lasts is T.

FIG. 2 illustrates the video frames and the corresponding timestamps after the resampling process for a data stream with a frame rate of 2/T. It can be seen that the video frames with the timestamps of T and 1.5T correspond to the same position index 1, so only the video frame of 1.5T is retained, and at the same time the timestamp of the video frame of 1.5T is changed to T. After the resampling process, the video data having a frame rate of 2/T is converted into video data having a frame rate of 1/T.

FIG. 3 illustrates the video frames and the corresponding timestamps after the resampling process for a data stream with a frame rate close to 1/T. It can be seen that the processing of video frames with the timestamps of T and 1.5T is the same as illustrated in FIG. 2. A video frame with a timestamp of 6.3T is calculated to have a position index of 6, and the timestamp of that video frame is changed to 6T. At the same time, a video frame with a position index of 5 is missing in the output video frames, so the video frame with a position index of 4 may be copied as the video frame corresponding to the position index 5.

Optionally, the process for resampling the audio frames may be as follows: converting the decoded audio frames based on a preset audio sampling rate and number of audio tracks; splitting and reorganizing the converted audio frames according to a preset number of sampling points, and determining a timestamp of the first sampling point of a reorganized audio frame as the timestamp of the reorganized audio frame.

In one implementation, since many audio encoders have a requirement of a fixed number of sampling points for the input audio frames, in order to facilitate audio mixing and sound effects processing for different data streams, after decoding the audio frames of the target data stream, the video composition server may convert the sampling rate and number of audio tracks of the decoded audio frames based on a preset audio sampling rate and number of audio tracks. According to a preset number of sampling points, the video composition server may further split and reorganize the converted audio frames, and determine a timestamp of the first sampling point of a reorganized audio frame as the timestamp of the reorganized audio frame. FIG. 4 illustrates a schematic diagram of resampled audio frames with a preset number of sampling points of 1024. In the figure, the arrows directing towards the parallelograms represent the splitting points for the audio frames, the parallelograms in the upper row are the audio frames before the reorganization, while the parallelograms in the lower row are the audio frames after the reorganization. The numbers inside the parallelograms are the numbers of sampling points included in the audio frames. It can be seen from FIG. 4 that, after the conversion of the audio sampling rate and the number of audio tracks, the audio frames may have different numbers of sampling points. After splitting and reorganization, each audio frame then contains 1024 sample points.

Optionally, the resampled audio frames may be similarly adjusted based on the position indexes. The specific process may be as follows: determining position indexes corresponding to the resampled audio frames according to the preset audio sampling rate, number of sampling points, and the timestamps of the audio frames; if there are multiple resampled audio frames that correspond to the same position index, retaining the audio frame that is resampled last in the multiple resampled audio frames, while deleting the other audio frames in the multiple audio frames; if the position indexes corresponding to the audio frames are discontinuous, determining all vacant position indexes and setting a silent audio frame for each vacant position index.

In one implementation, similar to the video resampling process, the video composition server may determine position indexes corresponding to the resampled audio frames according to the preset audio sampling rate, number of sampling points, and the timestamps of the audio frames. If there are multiple resampled audio frames that correspond to the same position index, then the last audio frame in the multiple audio frames with the same position index is retained while the other audio frames are deleted. If the position indexes of the resampled audio frames are discontinuous because the timestamp gaps of adjacent audio frames are relatively large, all the vacant position indexes may be determined first, then a silent audio frame is set for each corresponding vacant position index, to allow the position indexes to be continuous.

Step 104: generate position indexes according to timestamps of the resampled audio/video frames, and store the resampled audio/video frames in a second storage space through the position indexes.

After resampling the audio/video frames, the video composition server generates position indexes according to the timestamps of the resampled audio/video frames, and then stores the resampled audio/video frames in a second storage space through the position indexes. This allows the audio frames from different data streams that have the same position index to logically correspond to the same physical time, and the video frames from different data streams that have the same position index to also logically correspond to the same physical time. This, in combination with the same lasting time-length among the resampled audio/video frames from different data streams, facilitates synchronization of different data streams in the subsequent combining process. Here, the second storage space may be viewed as a preset second-level cache space for storing the decoded and resampled data.

The approach for generating the position indexes of the resampled audio/video frames is specifically as follows: determining a timestamp offset of the target data stream according to the service startup time, the timestamp of the first audio/video frame in the second storage space and the storing time corresponding to the first audio/video frame; adjusting the timestamps of the resampled audio/video frames according to the timestamp offset; and regenerating the position indexes of the audio/video frames based on the adjusted timestamps of the resampled audio/video frames.

When initiating a video-combining service, the video composition server records the current time Tₛₜₐᵣₜ (i.e., the service startup time) and records the timestamp TSᵢₙ of the first audio/video frame and the storing time T_{curr} corresponding to the first audio/video frame when the second storage space stores the first audio/video frame of the target data stream, and then calculates the timestamp offset of the target data stream: Off = T_{curr} - Tₛₜₐᵣₜ - TSᵢₙ. Thereafter, for all the resampled audio/video frames stored in the second storage space, the video composition server adds the timestamp offset Off to the timestamp of an audio/video frame as a new timestamp of the audio/video frame. In this way, the timestamps of the audio/video frames of data streams acquired at different times or data streams that have different startup timestamps are converted into a unified system timestamp, which facilitates the subsequent synchronization between different data streams. Next, the video composition server may divide the timestamp of an adjusted audio/video frame by the time-length that the frame lasts, and round down the result, to generate a position index of the resampled audio/video frame.

The audio data and the video data of the target data stream are separately stored in the second storage space. Correspondingly, partial process of Step 104 is as follows: dividing the second storage space into an audio storage space and a video storage space that respectively includes a preset number of cache positions; and respectively storing the resampled audio frames and the resampled video frames of the audio/video data into the audio storage space and the video storage space according to the position indexes of the audio/video frames.

The video composition server divides the second storage space into an audio storage space and a video storage space that respectively includes a preset number of cache positions. Each cache position is configured to store one audio frame or one video frame. The structures and properties of the audio storage space and the video storage space are identical. Afterwards, the video composition server may respectively store the resampled audio frames and the resampled video frames of the target data stream into the audio storage space and the video storage space according to the position indexes of the audio/video frames. Specific details of the above process may refer to FIG. 5, where the lower rectangular grids correspond to the cache positions in the audio storage space or the video storage space, the values inside the rectangular grids are the cache positions in the cache space, the upper parallelograms represent the audio frames or the video frames, and the numbers inside the parallelograms are the position indexes corresponding to the frames. When there are N cache positions, a remainder obtained by dividing the position index of each resampled audio frame or video frame by N may be used as the storage position. It can be seen that as the position index increases, the frames added to the second storage space cyclically overlay, and the frames whose position indexes differ by kN are located at the same cache position.

Step 105: periodically extract audio/video frames from the second storage space according to the position indexes, and combine the extracted audio/video frames with audio/video frames of other data streams.

After storing the resampled audio/video frames of the target data stream in the second storage space, the video composition server periodically extracts the audio/video frames at a certain time interval from the second storage space according to the position indexes of the resampled audio/video frames, and combines the extracted audio/video frames with audio/video frames of other data streams. Since the video frames from different data streams have the same lasting time-length and the audio frames from different data streams also have the same sampling rate, number of audio tracks, number of sampling points, etc., the video frames or audio frames extracted at one point by the video composition server from multiple different data streams in the second storage space are the frame data that logically correspond to the identical time point. Accordingly, synchronization between different data streams may be achieved, which facilitates performing the further video-combining process, such as video image combination, audio volume adjustment, and audio mixing.

Optionally, the audio/video frames may be extracted from the second storage space by referring to the current time. Correspondingly, the specific process of Step 105 may be as follows: determining a standard frame time-length of the audio/video frames based on the preset audio/video output parameters; periodically determining, at an interval of the standard frame time-length, a to-be-extracted index according to the current time and the standard frame time-length; and extracting an audio/video frame, whose position index is the to-be-extracted index, from the second storage space.

In one implementation, in the process of extracting a resampled audio/video frame from the second storage space, the video composition server may first determine a standard frame time-length of the audio/video frames based on the preset audio/video output parameters, and then use the standard frame time-length as an time interval to periodically determine a to-be-extracted index according to the current time and the standard frame time-length. Here, the to-be-extracted index may be the current time divided by the standard frame time-length. Afterwards, the video composition server may extract an audio/video frame, whose position index is the to-be-extracted index, from the second storage space.

Optionally, if a certain audio/video frame cannot be extracted from the second storage space, a frame-replenishing process may be performed. The corresponding process may be as follows: if there is no corresponding audio frame in the second storage space whose position index is the to-be-extracted index, creating a silent audio frame; and if there is no corresponding video frame in the second storage space whose position index is the to-be-extracted index, copying the most recently extracted video frame.

In one implementation, when no corresponding frame may be obtained from the second storage space according to the position index, the video composition server may perform a frame-replenishing process. For video frames, the video frame most recently extracted from the second storage space may be copied as the currently acquired video frame. For audio frames, a silent audio frame may be created as the currently acquired audio frame, and the number of sampling points of the audio frame is equal to the preset number of sampling points.

It should be noted that when the data stream network fluctuations cause the frame data in the first storage space or the second storage space to be all streamed, if the picture of the data stream at the moment when the data input returns to normal is hoped to be connected to the picture when the screen got stuck for continuous play, then, after a certain period of data being all streamed, the aforementioned timestamp of the initial audio frame and the timestamp of the initial video frame and the associated physical time to start decoding, and the timestamp of the first audio/video frame in the second storage space and the storing time corresponding to the first audio/video frame may be regenerated. If the latest picture of the data stream wants to be played directly, no further action is required.

In the embodiments of the present disclosure, the audio/video data of a target data stream is acquired, and the audio/video data is stored in the first storage space. According to the order of the timestamps of the audio/video frames of the audio/video data, the audio/video frames of the audio/video data are read and decoded from the first storage space. Based on the preset audio/video output parameters, the decoded audio/video frames are subjected to the resampling process. Position indexes are generated according to the timestamps of the resampled audio/video frames, and the resampled audio/video frames are stored in the second storage space based on the position indexes. The audio/video frames are periodically extracted from the second storage space according to the position indexes, and the extracted audio/video frames are combined with audio/video frames of other data streams. In this way, the video composition server mitigates the influence of network fluctuations through two levels of data cache. At the same time, by introducing the resampling technology, and by storing and retrieving the audio/video data using timestamps and positions indexes, synchronization of multiple data streams may be accomplished, and the process of combining data streams may be achieved more conveniently and efficiently.

In addition, between the stream-pulling process and the combining process of each data stream, an intersection occurs only in the second storage space, and there is no additional dependency or control between each other. For example, if there is a need to pull 4 channels of data streams and perform the combining process of kind of 4 windows of picture modes, the 4 channels of data streams may be independently pulled, decoded, and placed into the respective second-level cache. Relatively independent inputs and operations may be ensured between each data stream, and thus problems, such as stream-pulling jams and other problems, occur in one of the channels will not cause input problems to occur in other data streams. Therefore, the methods provided by the present disclosure may decouple the stream-pulling process from the combining process for each data stream simultaneously among various input data streams, which reduces the influence of the stream-pulling process on the combining process. Even if there is a problem in the stream-pulling process for one channel of data stream or there is a problem with the data stream itself, it will not affect other channels of data streams, thereby ensuring the stability of the combined pictures and sound.

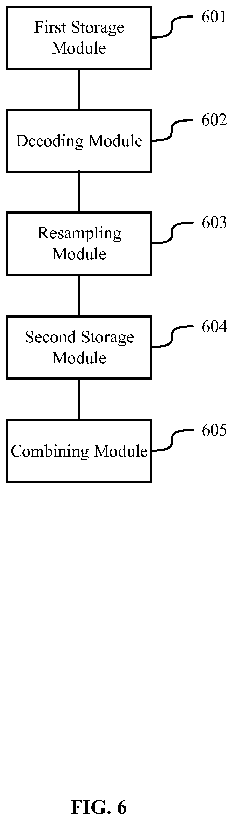

Based on the similar technical concept, the embodiments of the present disclosure further provide a device for combining audio/video data streams. As shown in FIG. 6, the device includes:
a first storage module 601 that is configured to acquire audio/video data of a target data stream, and store the audio/video data in a first storage space;
a decoding module 602 that is configured to read and decode audio/video frames of the audio/video data from the first storage space according to an order of timestamps of the audio/video frames of the audio/video data;
a resampling module 603 that is configured to resample the decoded audio/video frames based on preset audio/video output parameters;
a second storage module 604 that is configured to generate position indexes according to timestamps of the resampled audio/video frames, and store the resampled audio/video frames in a second storage space through the position indexes; and
a combining module 605 that is configured to periodically extract the audio/video frames from the second storage space according to the position indexes, and combine the extracted audio/video frames with audio/video frames of other data streams.

Optionally, the first storage module 601 is configured to:
Store the audio data and the video data included in the audio/video data in an audio storage space and a video storage space of the first storage space, respectively.

Optionally, the first storage module 601 is configured to:
if the target data stream is a live stream, in the process of storing the audio/video data in the first storage space, when the first storage space is full, delete the audio/video data stored earliest in the first storage space, and continue to store the audio/video data; and
if the target data stream is an on-demand stream, in the process of storing the audio/video data in the first storage space, when the first storage space is full, wait for the audio/video data stored in the first storage space to finish streaming, and then continue to store the audio/video data.

Optionally, the first storage module 601 is further configured to:
determine a size of the first storage space according to a preset maximum playback delay and a maximum network delay; and
in the process of acquiring the audio/video data of the target data stream, adjust the size of the first storage space according to detected playback delay requirement and/or real-time network delay.

Optionally, the decoding module 602 is further configured to:
periodically detect a timestamp-based time-length of the audio/video frames of the audio/video data read and decoded from the first storage space; and
if the timestamp-based time-length is greater than a product of a preset playing rate and a physical time-length used for reading and decoding the audio/video data, then suspend reading the audio/video frames of the audio/video data from the first storage space during a current cycle.

Optionally, the decoding module 602 is configured to:
record a timestamp of the initial audio frame and a timestamp of the initial video frame of the audio/video data read and decoded from the first storage space;
periodically detect a timestamp of the latest audio frame and a timestamp of the latest video frame of the audio/video data read and decoded from the first storage space; and
determine a difference between a smaller value of the timestamp of the latest audio frame and the timestamp of the latest video frame and a smaller value of the timestamp of the initial audio frame and the timestamp of the initial video frame as the timestamp-based time-length of the audio/video frames of the audio/video data.

Optionally, the decoding module 602 is configured to:
detect a timestamp of the latest audio frame and a timestamp of the latest video frame of the decoded audio/video data;
if the timestamp of the latest audio frame is greater than or equal to the timestamp of the latest video frame, read and decode the video frames of the audio/video data from the video storage space according to an order of the timestamps of the video frames; and
if the timestamp of the latest audio frame is less than the timestamp of the latest video frame, read and decode the audio frames of the audio/video data from the audio storage space according to an order of the timestamps of the audio frames.

Optionally, the resampling module 603 is configured to:
determine, based on a preset standard video frame rate and a timestamp of a decoded video frame, a position index corresponding to the decoded video frame; and
update the timestamp of the decoded video frame according to the position index.

Optionally, the resampling module 603 is further configured to:
if there are a plurality of decoded video frames that correspond to a same position index, retain the last video frame of the plurality of decoded video frames, and delete the other video frames of the plurality of decoded video frames; and
if position indexes corresponding to the decoded video frames are discontinuous, determine all vacant position indexes, and copy a video frame corresponding to an adjacent position index of a vacant position index as a video frame corresponding to the vacant position index.

Optionally, the resampling module 603 is configured to:
convert the decoded audio frames based on a preset audio sampling rate and the number of audio tracks; and
split and reorganize the converted audio frames according to a preset number of sampling points, and determine a timestamp of the first sampling point of a reorganized audio frame as a timestamp of the reorganized audio frame.

Optionally, the resampling module 603 is further configured to:
determine, according to the preset audio sampling rate and number of sampling points, and the timestamp of the reorganized audio frame, a position index corresponding to a resampled audio frame;
if there are a plurality of resampled audio frames that correspond to a same position index, retain an audio frame of the plurality of resampled audio frames that are last subjected to the resampling process, and delete the other audio frames of the plurality of resampled audio frames; and
if position indexes corresponding to the resampled audio frames are discontinuous, determine all vacant position indexes, and set a silent audio frame for a vacant position index.

Optionally, the second storage module 604 is configured to:
determine a timestamp offset of the target data stream according to a service startup time, and a timestamp of a first audio/video frame in the second storage space and a storing time corresponding to the second audio/video frame;
adjust a timestamp of a resampled audio/video frame according to the timestamp offset; and
regenerate a position index of the resampled audio/video frame based on the adjusted timestamp of the audio/video frame.

Optionally, the second storage module 604 is configured to:
divide the second storage space into an audio storage space and a video storage space that respectively includes a preset number of cache positions; and
respectively store the resampled audio frames and the resampled video frames of the audio/video data into the audio storage space and the video storage space according to the position indexes of the audio/video frames.

Optionally, the combining module 605 is configured to:
determine a standard frame time-length of the audio/video frames based on the preset audio/video output parameters;
periodically determine, at an interval of the standard frame time-length, a to-be-extracted index according to a current time and the standard frame time-length; and
extract, from the second storage space, an audio/video frame whose position index is the to-be-extracted index.

Optionally, the combining module 605 is further configured to:
create a silent audio frame if there is no corresponding audio frame, in the second storage space, whose position index is the to-be-extracted index; and
copy the most recently extracted video frame if there is no corresponding video frame, in the second storage space, whose position index is the to-be-extracted index.

In the embodiments of the present disclosure, the audio/video data of a target data stream is acquired, and the audio/video data is stored in the first storage space. According to the order of the timestamps of the audio/video frames of the audio/video data, the audio/video frames of the audio/video data are read and decoded from the first storage space. Based on the preset audio/video output parameters, the decoded audio/video frames are subjected to the resampling process. Position indexes are generated according to the timestamps of the resampled audio/video frames, and the resampled audio/video frames are stored in the second storage space based on the position indexes. The audio/video frames are periodically extracted from the second storage space according to the position indexes, and the extracted audio/video frames are combined with audio/video frames of other data streams. In this way, the video composition server mitigates the influence of network fluctuations through two levels of data cache. At the same time, by introducing the resampling technology, and by storing and retrieving the audio/video data using timestamps and positions indexes, synchronization of multiple data streams may be accomplished, and the process of combining data streams may be achieved more conveniently and efficiently. The methods provided by the present disclosure may decouple the stream-pulling process from the combining process for each data stream simultaneously among various input data streams, which reduces the influence of the stream-pulling process on the combining process. Even if there is a problem in the stream-pulling process for one channel of data stream or there is a problem with the data stream itself, it will not affect other channels of data streams, thereby ensuring the stability of the combined pictures and sound.

It should be noted that, when combining the audio/video data streams, the device provided by the foregoing embodiments for combining the audio/video data streams is only exemplified by the division of the foregoing functional modules. In real applications, the foregoing functions may be achieved by allocating to different functional modules based on the needs. That is, the internal structure of the device may be divided into different functional modules to achieve all or part of the functions described above. In addition, the device for combining the audio/video data streams provided by the foregoing embodiments and the method for combining the audio/video data streams are attributed to the same concept. The specific implementation process for the device may refer to the method-related embodiments, details of which will not be described again here.

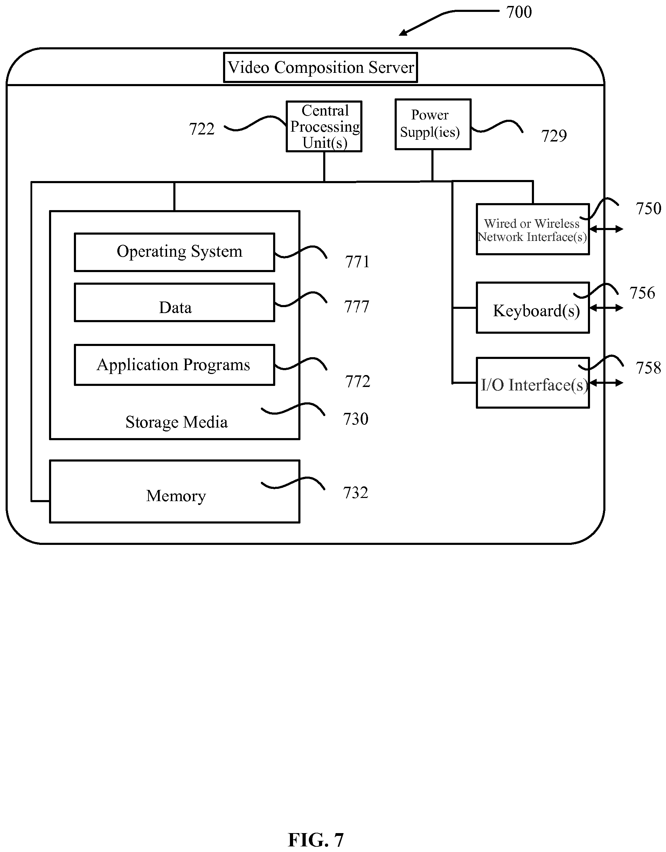

FIG. 7 is a schematic structural diagram of a video composition server according to some embodiments of the present disclosure. The video composition server 700 may vary considerably depending on the configuration or performance, and may include one or more central processing units 722 (e.g., one or more processors), a memory 732, and one or more storage media 730 for storing applications 772 or data 777 (e.g., one or one mass storage devices). The memory 732 and the storage media 730 may be a volatile or non-volatile storage device. The programs stored on the storage media 730 may include one or more modules (not shown in the figure), each of which may include a series of operation instructions for a video composition server. Further, the central processing unit(s) 722 may be configured to communicate with the storage media 730, and perform the series of operation instructions stored in the storage media 730 on the video composition server 700.

The video composition server 700 may also include one or more power supplies 726, one or more wired or wireless network interfaces 750, one or more input and output interfaces 758, one or more keyboards 756, and/or one or more operation systems 771, such as Windows Server^{™}, Mac OS X^{™}, Unix^{™}, Linux^{™}, FreeBSD^{™}, and the like.

The video composition server 700 may include a memory, and one or more programs, where the one or more programs are stored in the memory and configured to be executed by one or more processors. The one or more programs include the above-described instructions for combining the audio/video data streams.

A person skilled in the art may understand that all or part of the steps of the above embodiments may take the form of hardware implementation or the form of implementation of programs for instructing relevant hardware. The programs may be stored in a computer-readable storage medium. The storage medium may be a read-only memory, a magnetic disk, or an optical disk, etc.

## Claims

1. A method for processing audio/video data streams, comprising:
acquiring(101) audio/video data of a target data stream, and storing the audio/video data in a first storage space;
wherein storing the audio/video data in the first storage space further includes:
storing the audio data and the video data included in the audio/video data in an audio
storage space and a video storage space of the first storage space, respectively;
reading and decoding (102) audio/video frames of the audio/video data from the first storage space according to an increasing order of timestamps of the audio/video frames of the audio/video data;
wherein reading and decoding the audio/video frames of the audio/video data from the first storage space according to an increasing order of the timestamps of the audio/video frames of the audio/video data further includes:
detecting a timestamp of the latest audio frame and a timestamp of the latest video frame of the decoded audio/video data;
if the timestamp of the latest audio frame is greater than or equal to the timestamp of the latest video frame, reading and decoding the video frames of the audio/video data from the video storage space according to an order of the timestamps of the video frames; and
if the timestamp of the latest audio frame is less than the timestamp of the latest video frame, reading and decoding the audio frames of the audio/video data from the
audio storage space according to an order of the timestamps of the audio frames;
resampling (103) the decoded audio/video frames based on preset audio/video output parameters;
generating (104) position indexes of the resampled audio/video frames according to timestamps of the resampled audio/video frames, and storing the resampled audio/video frames in a second storage space according to the position indexes; and
wherein generating the position indexes of the resampled audio/video frames according to the timestamps of the resampled audio/video frames, and storing the resampled audio/video frames in the second storage space according to the position indexes further includes:
recording the current time as the service startup time, when initiating a video-combining service, and recording the timestamp of the first audio/video frame and the storing time corresponding to the first audio/video frame when the second storage space stores the first audio/video frame of the target data stream;
determining a timestamp offset of the target data stream according to the service startup time, and the timestamp of the first audio/video frame in the second storage space and the storing time corresponding to the first audio/video frame;
adjusting a timestamp of a resampled audio/video frame according to the timestamp offset;
generating a position index of the resampled audio/video frame based on the adjusted timestamp of the audio/video frame;
dividing the second storage space into an audio storage space and a video storage
space that respectively includes a preset number of cache positions, each cache position being configured to store one audio frame or one video frame; and
respectively storing the resampled audio frames and the resampled video frames of the audio/video data into the audio storage space and the video storage space
according to the position indexes of the audio/video frames;
periodically extracting (105) the audio/video frames from the second storage space according to the position indexes, and combining the extracted audio/video frames with audio/video frames of other data streamsthat logically have a same position index with the extracted audio/video frames.

2. The method according to claim 1, further comprising:
if the target data stream is a live stream, in the process of storing the audio/video data in the first storage space, when the first storage space is full, deleting the audio/video data stored earliest in the first storage space, and continuing to store the audio/video data; and
if the target data stream is an on-demand stream, in the process of storing the audio/video data in the first storage space, when the first storage space is full, continuing to store the audio/video data after the audio/video data stored in the first storage space are consumed.

3. The method according to claim 1, further comprising:
determining a size of the first storage space according to a preset maximum playback delay and a maximum network delay; and
in the process of acquiring the audio/video data of the target data stream, adjusting the size of the first storage space according to detected playback delay requirement and/or real-time network delay.

4. The method according to claim 1, further comprising:
periodically detecting a timestamp-based time-length of the audio/video frames of the audio/video data read and decoded from the first storage space; and
if the timestamp-based time-length is greater than a product of a preset playing rate and a physical time-length used for reading and decoding the audio/video data, then suspending reading the audio/video frames of the audio/video data from the first storage space during a current cycle.

5. The method according to claim 4, wherein periodically detecting the timestamp-based time-length of the audio/video frames of the audio/video data read and decoded from the first storage space further includes:
recording a timestamp of the initial audio frame and a timestamp of the initial video frame of the audio/video data read and decoded from the first storage space;
periodically detecting a timestamp of the latest audio frame and a timestamp of the latest video frame of the audio/video data read and decoded from the first storage space; and
determining a difference between a smaller value of the timestamp of the latest audio frame and the timestamp of the latest video frame and a smaller value of the timestamp of the initial audio frame and the timestamp of the initial video frame as the timestamp-based time-length of the audio/video frames of the audio/video data.

6. The method according to claim 1, wherein resampling the decoded audio/video frames based on the preset audio/video output parameters further includes:
determining, based on a preset standard video frame rate and a timestamp of a decoded video frame, a position index corresponding to the decoded video frame; and
updating the timestamp of the decoded video frame according to the position index.

7. The method according to claim 6, further comprising:
if there are a plurality of decoded video frames that correspond to a same position index, retaining the last video frame of the plurality of decoded video frames, and deleting the other video frames of the plurality of decoded video frames; and
if position indexes corresponding to the decoded video frames are discontinuous, determining all vacant position indexes, and copying a video frame corresponding to an adjacent position index of a vacant position index as a video frame corresponding to the vacant position index.

8. The method according to claim 1, wherein resampling the decoded audio/video frames based on the preset audio/video output parameters further includes:
converting the decoded audio frames based on a preset audio sampling rate and the number of audio tracks; and
splitting and reorganizing the converted audio frames according to a preset number of sampling points, and determining a timestamp of the first sampling point of a reorganized audio frame as a timestamp of the reorganized audio frame.

9. A device for processing audio/video data streams, comprising:
a first storage module(601) that is configured to acquire audio/video data of a target data stream, and store the audio/video data in a first storage space; storing the audio data and the video data included in the audio/video data in an audio storage space and a video storage space of the first storage space, respectively;
a decoding module(602) that is configured to read and decode audio/video frames of the audio/video data from the first storage space according to an increasing order of timestamps of the audio/video frames of the audio/video data; detecting a timestamp of the latest audio frame and a timestamp of the latest video frame of the decoded audio/video data; if the timestamp of the latest audio frame is greater than or equal to the timestamp of the latest video frame, reading and decoding the video frames of the audio/video data from the video storage space according to an order of the timestamps of the video frames; and if the timestamp of the latest audio frame is less than the timestamp of the latest video frame, reading and decoding the audio frames of the audio/video data from the audio storage space according to an order of the timestamps of the audio frames;
a resampling module(603) that is configured to resample the decoded audio/video frames based on preset audio/video output parameters;
a second storage module(604) that is configured to generate position indexes of the resampled audio/video frames according to timestamps of the resampled audio/video frames, and store the resampled audio/video frames in a second storage space according to the position indexes; recording the current time as the service startup time, when initiating a video-combining service, and recording the timestamp of the first audio/video frame and the storing time corresponding to the first audio/video frame when the second storage space stores the first audio/video frame of the target data stream; determining a timestamp offset of the target data stream according to the service startup time, and the timestamp of the first audio/video frame in the second storage space and the storing time corresponding to the first audio/video frame; adjusting a timestamp of a resampled audio/video frame according to the timestamp offset; generating a position index of the resampled audio/video frame based on the adjusted timestamp of the audio/video frame; dividing the second storage space into an audio storage space and a video storage space that respectively includes a preset number of cache positions, each cache position being configured to store one audio frame or one video frame; and respectively storing the resampled audio frames and the resampled video frames of the audio/video data into the audio storage space and the video storage space according to the position indexes of the audio/video frames; and
a combining module(605) that is configured to periodically extract the audio/video frames from the second storage space according to the position indexes, and combine the extracted audio/video frames with audio/video frames of other data streams that logically have a same position index with the extracted audio/video frames.

10. The device according to claim 9, wherein the first storage module is further configured to:
if the target data stream is a live stream, in the process of storing the audio/video data in the first storage space, when the first storage space is full, delete the audio/video data stored earliest in the first storage space, and continue to store the audio/video data; and
if the target data stream is an on-demand stream, in the process of storing the audio/video data in the first storage space, when the first storage space is full, continue to store the audio/video data after the audio/video data stored in the first storage space are consumed.

11. The device according to claim 9, wherein the first storage module is further configured to:
determine a size of the first storage space according to a preset maximum playback delay and a maximum network delay; and
in the process of acquiring the audio/video data of the target data stream, adjust the size of the first storage space according to detected playback delay requirement and/or real-time network delay.

12. The device according to claim 9, wherein the decoding module is further configured to:
periodically detect a timestamp-based time-length of the audio/video frames of the audio/video data read and decoded from the first storage space; and
if the timestamp-based time-length is greater than a product of a preset playing rate and a physical time-length used for reading and decoding the audio/video data, suspend reading the audio/video frames of the audio/video data from the first storage space during a current cycle.

## Patentansprüche

1. Eine Methode für die Verarbeitung von Audio/Video-Datenströmen, die Folgendes umfasst:
Erfassen (101) von Audio/Video-Daten eines Zieldatenstroms, und Speichern der Audio/Video-Daten in einem ersten Speicherplatz;
wobei das Speichern der Audio/Video-Daten im ersten Speicherplatz weiter Folgendes einschliesst:
Speichern der in den Audio/Video-Daten eingeschlossenen Audio-Daten und Video-Daten jeweils in einem Audio-Speicherplatz und einem Video-Speicherplatz des ersten Speicherplatzes;
Lesen und Decodierung (102) von Audio/Video-Rahmen der Audio/Video-Daten vom ersten Speicherplatz übereinstimmend mit einer steigenden Reihenfolge von Zeitstempeln der Audio/Video-Rahmen der Audio/Video-Daten;
wobei das Lesen und die Decodierung der Audio/Video-Rahmen der Audio/Video-Daten vom ersten Speicherplatz gemäss einer steigenden Reihenfolge von Zeitstempeln der Audio/Video-Rahmen der Audio/Video-Daten weiter Folgendes einschliesst:
Erfassen eines Zeitstempels des letzten Audio-Rahmens und eines Zeitstempels des letzten Video-Rahmens der decodierten Audio/Video-Daten;
wenn der Zeitstempel des letzten Audio-Rahmens grösser ist als oder gleich dem Zeitstempel des letzten Video-Rahmens, Lesen und Decodieren der Video-Rahmen der Audio/Video-Daten aus dem Video-Speicherplatz übereinstimmend mit einer Reihenfolge der Zeitstempel der Video-Rahmen; und
wenn der Zeitstempel des letzten Audio-Rahmens geringer ist als der Zeitstempel des letzten Video-Rahmens, Lesen und Decodieren der Audio-Rahmen von den Audio/Video-Daten aus dem Audio-Speicherplatz übereinstimmend mit einer Reihenfolge der Zeitstempel der Audio-Rahmen;
Neuabtastung (103) der decodierten Audio/Video-Rahmen basierend auf voreingestellten Audio/Video-Ausgabeparametern;
Erzeugung (104) von Positionsindizes der neuabgetasteten Audio/Video-Rahmen übereinstimmend mit den Zeitstempeln der neuabgetasteten Audio/Video-Rahmen, und Speichern der neuabgetasteten Audio/Video-Rahmen in einem zweiten Speicherplatz übereinstimmend mit den Positionsindizes; und
Wobei die Erzeugung der Positionsindizes der neuabgetasteten Audio/-Video-Rahmen gemäss den Zeitstempeln der neuabgetasteten Audio/Video-Rahmen und das Speichern der neuabgetasteten Audio/Video-Rahmen im zweiten Speicherplatz übereinstimmend mit den Positionsindizes weiter Folgendes einschliesst:
Aufzeichnung der aktuellen Zeit als die Service-Startzeit, wenn ein Video-Kombinations-Service eingeleitet wird, und Aufzeichnung des Zeitstempels des ersten Audio/Video-Rahmenss und der dem ersten Audio/Video-Rahmens entsprechenden Speicherzeit, wenn der zweite Speicherplatz den ersten Audio/Video-Rahmen des Zieldatenstroms speichert;
Einstellen eines Zeitstempels eines neuabgetasteten Audio/Video-Rahmens basierend auf dem eingestellten Zeitstempel des Audio/Video-Rahmens;
Aufteilung des zweiten Speicherplatzes in einen Audio-Speicherplatz und einen Video-Speicherplatz, die jeweils eine voreingestellte Anzahl von Cache-Positionen einschliessen, wobei jede Cache-Position konfiguriert ist, um einen Audio-Rahmen oder einen Video-Rahmen zu speichern; und
jeweils Speichern der neuabgetasteten Audio-Rahmen und der neuabgetasteten Video-Rahmen der Audio/Video-Daten im Audio-Speicherplatz und Video-Speicherplatz übereinstimmend mit den Positionsindizes der Audio/Video-Rahmen;
regelmässige Extraktion (105) der Audio/Video-Rahmen aus dem zweiten Speicherplatz übereinstimend mit den Positionsindizes, und Kombination der gewonnenen Audio/Video-Rahmen mit anderen Audio/Video-Rahmen von anderen Datenströmen, die logischerweose denselben Positionsidex wie die gewonnenen Audio/Video-Rahmen aufweisen.

2. Die Methode gemäss Anspruch 1, die weiter Folgendes umfasst:
Wenn der Datenstrom im Speicherungsvorgang der Audio/Video-Daten im ersten Speicherplatz ein Live-Strom ist, wenn der ersste Speicherplatz voll ist, Löschen der am frühesten, im ersten Speicherplatz gespeicherten Audio/Video-Daten und Fortfahren mit der Speicherung der Audio/Video-Daten; und
wenn der Zieldatenstrom im Speicherungsvorgang der Audio/Video-Daten im ersten Speicherplatz ein Strom auf Anfrage ist, wenn der erste Speicherplatz voll ist, Fortfahren mit der Speicherung der Audio/Video-Daten nach Verarbeitung der im ersten Speicherplatz gespeicherten Audio/Video-Daten.

3. Die Methode gemäss Anspruch 1, die weiter Folgendes umfasst:
Bestimmung eines Umfangs des ersten Speicherplatzes übereinstimmend mit einer maximalen Wiedergabeverzögerung und einer maximalen Netzwerkverzögerung; und
beim Erfassungsvorgang der Autio/Video-Daten des Zieldatenstroms Anpassung der Grösse des ersten Speicherplatzes übereinstimmend mit der festgestellten Anforderung an die Wiedergabeverzögerung und/oder die Netzwerkverzögerung in Echtzeit.

4. Die Methode gemäss Anspruch 1, die weiter Folgendes umfasst:
Regelmässige Feststellung einer Zeitdauer basierend auf dem Zeitstempel der Audio/Video-Rahmen der aus dem ersten Speicherplatz gelesenen und decodierten Autio/Video-Daten; und
wenn die Zeitdauer basierend auf dem Zeitstempel grösser ist als ein Produkt einer voreingestellten Abspielrate und einer physischen Zeitdauer, die für das Lesen und Decodieren der Audio/Video-Daten benutzt werden, Suspendieren des Lesevorgangs der Audio/Video-Rahmen der Audio/Video-Daten aus dem ersten Speicherplatz während eines laufenden Zyklus.

5. Die Methode gemäss Anspruch 4, bei der die regelmässige Feststellung der auf dem Zeitstempel basierenden Zeitdauer der Audio/Video-Rahmen der Audio/Video-Daten, die aus dem ersten Speicherplatz gelesen und decodiert werden, weiter Folgendes einschliesst:
Aufnahme eines Zeitstempels des anfänglichen Audio-Rahmens und Zeitstempel des anfänglichen Video-Rahmens der aus dem ersten Speicherplatz gelesenen und decodierten Audio/Video-Daten;
regelmässige Feststellung eines Zeitstempels des letzten Audio-Rahmens und eines Zeitstempels des letzten Video-Rahmens der aus dem ersten Speicherplatz gelesenen und decodierten Audio/Video-Daten; und
Bestimmung einer Differenz zwischen einem kleineren Wert des Zeitstempels des letzten Audio-Rahmens und des Zeitstempel des letzten Video-Rahmens und einem kleineren Wert des Zeitstempels des anfänglichen Audio-Rahmens und des Zeitstempels des anfänglichen Video-Rahmens als auf dem Zeitstempel basierende Zeitdauer des Audio/Video-Rahmens der Audio/Video-Daten.

6. Die Methode gemäss Anspruch 1, bei der die auf den voreingestellten Audio/Video-Ausgabeparametern basierende Neuabtastung der decodierten Audio/Video-Rahmen weiter Folgendes einschliesst:
Basierend auf einer vorbestimmten, Standard-Video-Rahmenrate und einem Zeitstempel eines decodierten Video-Rahmens, Bestimmung eines dem decodierten Video-Rahmen entsprechenden Positionsindexes; und
Aktualisierung des Zeitstempels des decodierten Video-Rahmens übereinstimmed mit dem Positionsindex.

7. Die Methode gemäss Anspruch 6, die weiter Folgendes umfasst:
Wenn eine Vielzahl an decodierten Video-Rahmen vorhanden ist die demselben Positionsindex entsprechen, Zurückhalten des letzten Video-Rahmens der Vielzahl an decodierten Video-Rahmen und Löschen der anderen Video-Rahmen der Vielzahl an decodierten Video-Rahmen; und
wenn der den decodierten Video-Rahmen entsprechende Positionsindex diskontinuierlich ist, Bestimmung aller freien Positionsindexe und Kopieren eines einem angrenzenden Positionsindex entsprechenden Video-Rahmens eines freien Positionsindexes als ein dem freien Positionsindex entsprechender Video-Rahmen.

8. Die Methode gemäss Anspruch 1, bei der die Neuabtastung der decodierten Audio/Video-Rahmen, weiter basierend auf den voreingestellten Audio/Video-Ausgabeparametern, die Konvertierung der decodierten Audio-Rahmen basierend auf einer voreingestellten Neuabtastungsrate und der Anzahl an Audio-Spuren einschliesst; und
Aufspalten und erneute Organisation der konvertierten Audio-Rahmen übereinstimmend mit einer voreingestellten Anzahl von Neuabtastungspunkten und Bestimmung eines Zeitstempels des ersten Neuabtastungspunktes eines erneut organisierten Audio-Rahmens als ein Zeitstempel des erneut organisierten Audio-Rahmens.

9. Eine Vorrichtung zur Verarbeitung von Audio/Video-Strömen, die Folgendes umfasst:
Ein erstes Speichermodul (601), das konfiguriert ist, um Audio/Video-Daten von einem Zieldatenstrom zu erfassen und die Audio/Video-Daten in einem ersten Speicherplatz zu speichern; Speichern in einem Audio-Speicherplatz und einem Video-Speicherplatz des ersten Speicherplatzes jeweils der in den Audio/Video-Daten eingeschlossenen Audio-Daten und Video-Daten;
ein Decodierungsmodul (602), das konfiguriert ist, um Audio/Video-Rahmen der Audio/Video-Daten aus dem ersten Speicherplatz zu lesen und decodieren übereinstimmend mit einer steigenden Reihenfolge von Zeitstempeln der Audio/Video-Rahmen der Audio/Video-Daten; Ermitteln eines Zeitstempels des letzten Audio-Rahmens und eines Zeitstempels des letzten Video-Rahmens der decodierten Audio/Video-Daten; wenn der Zeitstempel des letzten Audio-Rahmens grösser ist als oder gleich dem Zeitstempel des letzten Video-Rahmens, Lesen und Decodieren der Video-Rahmen der Audio/Video-Daten aus dem Video-Speicherplatz übereinstimmend mit einer Reihenfolge der Zeitstempel der Video-Rahmen; und wenn der Zeitstempel des letzten Audio-Rahmens kleiner ist als der Zeitstempel des letzten Video-Rahmens, Lesen und Decodieren der Audio-Rahmen der Audio/Video-Daten aus dem Audio-Speicherplatz übereinstimmend mit einer Reihenfolge der Zeitstempel der Audio-Rahmen;
ein Neuabtastungsmodul (603), das konfiguriert ist, um die decodierten Audio/Video-Rahmen basierend auf voreingestellten Audio/Video-Ausgabeparametern neu abzutasten;
ein zweites Speichermodul (604), das konfiguriert ist, um Positionsindexe der neu abgetasteten Audio/Video-Rahmen übereinstimmend mit Zeitstempeln der neu abgetasteten Audio/Video-Rahmen zu erzeugen und die neu abgetasteten Audio/Video-Rahmen in einem zweiten Speicherplatz übereinstimmend mit den Positionsindexen zu speichern; Registrierung der aktuellen Zeit bei Starten eines Video-Kombinierungs-Services als die Service-Startzeit und Registrierung des Zeitstempels des ersten Audio/Video-Rahmens und der dem ersten Audio/Video-Rahmen entsprechenden Speicherzeit, wenn der zweite Speicherplatz den ersten Audio/Video-Rahmen des Zieldatenstroms speichert;
Bestimmung des Zeitstempel-Offsets des Zieldatenstroms übereinstimmend mit der Service-Startzeit, und des Zeitstempels des ersten Audio/Video-Rahmens im zweiten Speicherplatz und die dem ersten Audio/Video-Rahmen entsprechende Speicherzeit;
Anpassen eines Zeitstempels des neu abgetasteten Audio/Video-Rahmens übereinstimmend mit dem Zeitstempel-Offset;
Erzeugung eines Positionsindexes des neu abgetasteten Audio/Video-Rahmens basierend auf dem angepassten Zeitstempel des Audio/Video-Rahmens; Aufteilen des zweiten Speicherplatzes in einen Audio-Speicherplatz und einen Video-Speicherplatz, die jeweils eine voreingestellte Anzahl an Cache-Positionen einschliessen, wobei jede Cache-Position konfiguriert ist, um einen Audio-Rahmen oder einen Video-Rahmen zu speichern; und
jeweiliges Speichern der neu abgetasteten Audio-Rahmen und der neu abgetasteten Video-Rahmen der Audio/Video-Daten im Audio-Speicherplatz und dem Video-Speicherplatz übereinstimmend mit den Positionsindexen der Audio/Video-Rahmen; und
ein Kombinierungsmodul (605), das konfiguriert ist, um regelmässig die Audio/Video-Rahmen aus dem zweiten Speicherplatz übereinstimmend mit den Positionsindexen zu extrahieren und die extrahierten Audio/Video-Rahmen mit Audio/Video-Rahmen von anderen Datenströmen zu kombinieren, die logischerweise denselben Positionsindex wie die extrahierten Audio/Video-Rahmen aufweisen,

10. Die Vorrichtung gemäss Anspruch 9, bei der das erste Speichermodul ausserdem konfiguriert ist, um:
Wenn der Zieldatenstrom im Speicherungsvorgang der Audio/Video-Daten im ersten Speicherplatz ein Live-Strom ist, wenn der erste Speicherplatz voll ist, Löschen der am frühesten im ersten Speicherplatz gespeicherten Audio/Video-Daten und Fortfahren mit der Speicherung der Audio/Video-Daten; und
wenn der Zieldatenstrom ein Datenstrom auf Abruf im Speicherungsvorgang der Audio/Video-Daten im ersten Speicherplatz ist, wenn der erste Speicherplatz voll ist, Fortfahren mit der Speicherung der Audio/Video-Daten, nachdem die im ersten Speicherplatz gespeicherten Daten verarbeitet sind.

11. Die Vorrichtung gemäss Anspruch 9, bei der das erste Speichermodul weiter konfiguriert ist, um:
Eine Grösse des ersten Speicherplatzes übereinstimmend mit der maximalen, voreingestellten Wiedergabeverzögerung und einer maximalen Netzwerkverzögerung zu bestimmen; und
während des Erfassungsvorgangs der Audio/Video-Daten des Zieldatenstroms die Grösse des ersten Speicherplatzes übereinstimmend mit der festgestellten Wiedergabeverzögerungsanforderung und/oder der Netzwerkverzögerung in Echtzeit anzupassen.

12. Die Vorrichtung gemäss Anspruch 9, bei der das Decodierungsmodul weiter konfiguriert ist, um:
Regelmässig basierend auf einem Zeitstempel eine Zeitdauer der Audio/Video-Rahmen der aus dem ersten Speicherplatz gelesenen oder decodierten Audio/Video-Daten zu ermitteln; und
wenn die Zeitdauer basierend auf dem Zeitstempel grösser ist als das Produkt einer voreingestellten Abspielrate und eine physische, für das Lesen und die Decodierung der Audio/Video-Daten benutzte Zeitdauer, Suspendierung des Lesevorgangs der Audio/Video-Rahmen der Audio/Video-Daten aus dem ersten Speicherplatz während eines laufenden Zyklus.

## Revendications

1. Une méthode de traitement de flux de données audio/vidéo, comprenant les pas suivants:
obtenir (101) les données audio/vidéo d'un flux de données cible et stocker les données audio/vidéo dans un espace de un premier stockage;
où le stockage des données audio/vidéo dans l'espace du premier stockage comprend en outre les pas suivants:
stocker les données audio et les données vidéo comprises dans les données audio/vidéo dans un espace de stockage audio et un espace de stockage vidéo, respectivement;
lire et décoder (102) les trames audio/vidéo des données audio/vidéo à partir de l'espace fu premier stockage selon un ordre ascendant des horodatages des trames audio/vidéo des données audio/vidéo;
où la lecture et le décodage des trames audio/vidéo des données audio/vidéo à partir de l'espace du premier stockage selon un ordre ascendant des horodatages des trames audio/vidéo des données audio/vidéo comprennent en outre les pas suivants:
détecter un horodatage de la dernière trame audio et un horodatage de la dernière trame vidéo des données audio/vidéo décodées;
si l'horodatage de la dernière trame audio est supérieur ou égal à l'horodatage de la dernière trame vidéo, lire et décoder les trames vidéo des données audio/vidéo à partir de l'espace de stockage vidéo selon l'ordre des horodatages des trames vidéo; et
si l'horodatage de la dernière trame audio est inférieur à l'horodatage de la dernière trame vidéo, lire et décoder les trames audio des données audio/vidéo à partir de l'espace de stockage audio selon l'ordre des horodatages des trames audio;
rééchantillonner (103) les trames audio/vidéo décodées sur la base des paramètres de sortie audio/vidéo prédéfinis;
générer (104) des index de positions des trames audio/vidéo rééchantillonnées selon les horodatages des trames audio/vidéo rééchantillonnées, et stocker les trames audio/vidéo rééchantillonnées dans un espace de un deuxième stockage selon les index de positions; et
où la génération des index de positions des trames audio/vidéo rééchantillonnées, selon les horodatages des trames audio/vidéo rééchantillonnées, et le stockage des trames audio/vidéo rééchantillonnées dans l'espace du deuxième stockage, selon les index de positions, comprennent en outre les pas suivants:
enregistrer l'heure en cours comme heure de commencement du service, lors du commencement du service de combinaison vidéo, et enregistrer l'horodatage de la première trame audio/vidéo et l'heure de stockage correspondant à la première trame audio/vidéo lorsque l'espace du deuxième stockage procède à stocker la première trame audio/vidéo du flux de données cible;
déterminer le décalage de l'horodatage du flux de données cible selon l'heure de commencement du service, et l'horodatage de la première trame audio/vidéo à partir de l'espace du deuxième stockage, et l'heure de stockage correspondant à la première trame audio/vidéo;
ajuster l'horodatage d'une trame audio/vidéo rééchantillonnée selon le décalage de l'horodatage;
générer un index de positions de la trame audio/vidéo rééchantillonnée sur la base de l'horodatage ajusté de la trame audio/vidéo;
diviser l'espace du deuxième stockage en un espace de stockage audio et en un espace de stockage vidéo qui incluent respectivement un nombre de positions cache prédéfinies, chaque position cache étant configurée pour stocker une trama audio ou une trame vidéo; et
stocker respectivement les trames audio rééchantillonnées et les trames vidéo rééchantillonnées des données audio/vidéo dans l'espace de stockage audio et l'espace de stockage vidéo selon les index de positions des trames des trames audio/vidéo;
extraire périodiquement (105) les trames audio/vidéo de l'espace du deuxième stockage selon les index de positions, et combiner les trames audio/vidéo extraites avec les trames audio/vidéo d'autres flux de données, qui ont logiquement le même index de positions, avec les trames audio/vidéo extraites.

2. La méthode conformément à la revendication 1, comprenant en outre les pas suivants:
si le flux de données cible est un flux en temps réel, au cours du procédé de stockage des données audio/vidéo dans l'espace du premier stockage, lorsque l'espace du premier stockage est plein, éliminer les données audio/vidéo ayant été stockées les premières dans l'espace du premier stockage, et continuer à stocker les données audio/vidéo ; et
si le flux de données cible est un flux sur demande, au cours du procédé de stockage des données audio/vidéo dans l'espace du premier stockage, lorsque l'espace du premier stockage est plein, continuer à stocker les données audio/vidéo après que les données audio/vidéo stockées dans l'espace du premier stockage soient consommées.

3. La méthode conformément à la revendication 1, comprenant en outre les pas suivants:
déterminer la taille de l'espace du premier stockage selon un retard de playback maximum et un retard de réseau maximum prédéfinis; et
au cours du procédé d'obtention des données audio/vidéo du flux de données cible, ajuster la taille de l'espace du premier stockage selon les exigences du retard de playback détectées et/ou le retard de réseau en temps réel.

4. La méthode conformément à la revendication 1, comprenant en outre les pas suivants:
détecter périodiquement la longueur du temps basée sur l'horodatage des trames audio/vidéo des données audio/vidéo lues et décodées à partir de l'espace du premier stockage; et
si la longueur du temps basée sur l'horodatage est supérieure au produit du taux de transmission prédéfini multiplié par la longueur de temps physique utilisée pour lire et décoder les données audio/vidéo, il faut suspendre la lecture des trames audio/vidéo des données audio vidéo de l'espace du premier stockage pendant le cycle en cours.

5. La méthode conformément à la revendication 4, où la détection périodiquement de la longueur du temps basée sur l'horodatage des trames audio/vidéo des données audio/vidéo, lues et décodées à partir de l'espace du premier stockage, comprend en outre les pas suivants:
enregistrer un horodatage de la trame audio initiale et un horodatage de la trame vidéo initiale des données audio/vidéo lues et décodées à partir de l'espace du premier stockage;
détecter périodiquement l'horodatage de la dernière trame audio et l'horodatage de la dernière trame vidéo des données audio/vidéo, lues et décodées à partir de l'espace du premier stockage; et
déterminer la différence entre la valeur inférieure de l'horodatage de la dernière trame audio et l'horodatage de la dernière trame vidéo, et la valeur inférieure de l'horodatage de la trame audio initiale et l'horodatage de la trame vidéo initiale, comme longueur de temps basée sur l'horodatage des trames audio/vidéo des données audio/vidéo.

6. La méthode conformément à la revendication 1, où le rééchantillonnage des trames audio/vidéo décodées sur la base des paramètres de sortie audio/vidéo prédéfinis comprend en outre les pas suivants:
déterminer, sur la base d'un taux de trames vidéo standard prédéfini et l'horodatage d'une trame vidéo décodée, un index de positions correspondant à la trame vidéo décodée; et
actualiser l'horodatage de la trame vidéo décodée conformément à l'index de positions.

7. La méthode conformément à la revendication 6, comprenant en outre les pas suivants:
s'il existe une série de trames vidéo décodées qui correspondent à un même index de positions, retenir la dernière trame vidéo parmi ladite série de trames vidéo décodées, et éliminer les autres trames de la série de trames vidéo décodées; et
si les index de positions correspondant aux trames vidéo décodées sont discontinus, déterminer tous les index aux positions vacantes, et copier la trame vidéo correspondant à un index de position adjacente d'un index à position vacante comme trame vidéo correspondant à l'index à positon vacante.

8. La méthode conformément à la revendication 1, où le rééchantillonnage des trames audio/vidéo décodées sur la base des paramètres de sortie audio/vidéo prédéfinis comprend en outre les pas suivants:
convertir les trames audio décodées sur la base d'un taux d'échantillonnage audio prédéfini et le nombre de pistes audio; et
séparer et réorganiser les trames audio converties conformément au nombre de points d'échantillonnage prédéfinis, et déterminer l'horodatage du premier point d'échantillonnage d'une trame audio réorganisée comme horodatage de la trame audio réorganisée.

9. Un dispositif de traitement des flux de données audio/vidéo comprenant les éléments suivants:
un module de premier stockage (601), configuré pour obtenir les données audio/vidéo d'un flux de données cible, et stocker les données audio/vidéo dans un espace de un premier stockage; stocker les données audio et les données vidéo incluses dans les données audio/vidéo dans un espace de stockage audio et un espace de stockage vidéo de l'espace du premier stockage, respectivement;
un module de décodage (602), configuré pour lire et décoder les trames audio/vidéo des données audio/vidéo à partir de l'espace du premier stockage selon un ordre ascendant des horodatages des trames audio/vidéo des données audio/vidéo; détecter l'horodatage de la dernière trame audio et l'horodatage de la dernière trame vidéo décodées; si l'horodatage de la dernière trame audio est supérieur ou égal à l'horodatage de la dernière trame vidéo, lire et décoder les trames vidéo des données audio/vidéo à partir de l'espace de stockage vidéo selon l'ordre des horodatages des trames vidéo; et si l'horodatage de la dernière trame audio est inférieur à l'horodatage de la dernière trame vidéo, lire et décoder les trames audio des données audio/vidéo à partir de l'espace de stockage audio selon l'ordre des horodatages des trames audio;
un module de rééchantillonnage (603), configuré pour rééchantillonner les trames audio/vidéo décodées sur la base des paramètres de sortie audio/vidéo prédéfinis;
un module de deuxième stockage (604), configuré pour générer des index de positions des trames audio/vidéo rééchantillonnées selon les horodatages des trames audio/vidéo rééchantillonnées, et pour stocker les trames audio/vidéo rééchantillonnées dans un espace de deuxième stockage selon les index de positions; enregistrer l'heure en cours comme heure de commencement du service, lors du commencement du service de combinaison vidéo, et enregistrer l'horodatage de la première trame audio/vidéo et l'heure de stockage correspondant à la première trame audio/vidéo lorsque l'espace du deuxième stockage stocke la première trame audio/vidéo du flux de données cible; déterminer un décalage de l'horodatage du flux de données cible selon l'heure de commencement du service, et l'horodatage de la première trame audio/vidéo dans l'espace du deuxième stockage et l'heure de stockage correspondant à la première trame audio/vidéo; ajuster l'horodatage de la trame audio/vidéo rééchantillonnée conformément au décalage de l'horodatage; générer un index de positions de la trame audio/vidéo rééchantillonnée sur la base de l'horodatage ajusté de la trame audio/vidéo; diviser l'espace du deuxième stockage en un espace de stockage audio et un espace de stockage vidéo incluant respectivement un nombre de positions cache prédéfini, chaque position cache étant configurée pour stocker une trame audio ou une trame vidéo; et stocker, respectivement, les trames audio rééchantillonnés et les trames vidéo rééchantillonnées des données audio/vidéo dans l'espace de stockage audio et dans l'espace de stockage vidéo selon les index de positions des trames audio/vidéo; et
un module de combinaison (605), configuré pour extraire périodiquement les trames audio/vidéo de l'espace du deuxième stockage selon les index de positions, et combiner les trames audio/vidéo extraites avec les trames audio/vidéo d'autres flux de données qui ont, logiquement, le même index de positions avec les trames audio/vidéo extraites.

10. Le dispositif conformément à la revendication 9, où le module de premier stockage est configuré en outre pour effectuer les pas suivants:
si le flux de données cible est un flux en temps réel, au cours du procédé de stockage des données audio/vidéo dans l'espace du premier stockage, lorsque l'espace du premier stockage est plein, éliminer les données audio/vidéo ayant été stockées les premières dans l'espace du premier stockage, et continuer à stocker les données audio/vidéo; et
si le flux de données cible est un flux sur demande, au cours du procédé de stockage des données audio/vidéo dans l'espace du premier stockage, lorsque l'espace du premier stockage est plein, continuer à stocker les données audio/vidéo après que les données audio/vidéo stockées dans l'espace du premier stockage soient consommées.

11. Le dispositif conformément à la revendication 9, où le module de premier stockage est configuré en outre pour effectuer les pas suivants:
déterminer la taille de l'espace du premier stockage selon un retard de playback maximum et un retard de réseau maximum prédéfinis; et
au cours du procédé d'obtention des données audio/vidéo du flux de données cible, ajuster la taille de l'espace du premier stockage selon les exigences du retard de playback détectées et/ou le retard de réseau en temps réel.

12. Le dispositif conformément à la revendication 9, où le module de décodage est configuré en outre pour effectuer les pas suivants:
détecter périodiquement la longueur du temps basée sur l'horodatage des trames audio/vidéo des données audio/vidéo lues et décodées à partir de l'espace du premier stockage; et
si la longueur du temps basée sur l'horodatage est supérieure au produit du taux de transmission prédéfini et de la longueur de temps physique utilisée pour lire et décoder les données audio/vidéo, il faut suspendre la lecture des trames audio/vidéo des données audio vidéo de l'espace du premier stockage pendant le cycle en cours.
